# EUROPÄISCHE PATENTSCHRIFT

(11) **EP 1 188 217 B1**
(45) Veröffentlichungstag und Bekanntmachung des Hinweises auf die Patenterteilung: **17.09.2008**
(21) Anmeldenummer: 01942977.8
(22) Anmeldetag: 20.04.2001
(51) Int. Cl.: H02K 11/04, E05F 15/16

(54) **ELEKTROMECHANISCHE ANTRIEBSVORRICHTUNG**
ELECTROMECHANICAL DRIVE DEVICE
DISPOSITIF D'ENTRAINEMENT ELECTROMECANIQUE

(30) Priorität: 22.04.2000 DE 10020018
(43) Veröffentlichungstag der Anmeldung: 20.03.2002
(73) Patentinhaber: Brose Fahrzeugteile GmbH & Co. KG, Coburg, 96450 Coburg (DE)
(72) Erfinder: BECKER, Herbert, 96450 Coburg (DE); SCHELHORN, Gerhard, 96450 Coburg (DE); AAB, Volker, 96145 Sesslach-Heiligersdorf (DE); KURZENDÖRFER, Reiner, 96450 Coburg (DE); ROSENTHAL, Karl-Heinz, 76307 Karlsbad (DE)
(74) Vertreter: Baumgärtel, Gunnar
(86) Internationale Anmeldenummer: PCT/DE2001/001597
(87) Internationale Veröffentlichungsnummer: WO 2001/082451

(56) Entgegenhaltungen:
- FR-A- 2 766 301
- US-A- 5 315 194

## Beschreibung

Die Erfindung betrifft eine elektromechanische Antriebsvorrichtung für Verstelleinrichtungen eines Kraftfahrzeugs, insbesondere für einen Fensterheber.

Zum Heben und Senken von Fensterscheiben eines Kraftfahrzeugs sind elektromotorische Fensterheber bekannt, die zum Einbau in Türen von Kraftfahrzeugen geeignet sind und eine Antriebsvorrichtung in Form beispielsweise eines Elektromotors mit angeschlossenem Getriebe oder eines Getriebemotors aufweisen, der über eine Leitungsverbindung und einen Schalter an eine Kraftfahrzeugbatterie anschließbar ist.

Die in der Fahrzeugtür über den elektromotorischen Fensterheber hebbare oder absenkbare Fensterscheibe ist dabei an ihrer unteren Kante an einem Führungsschlitten befestigt, der entlang einer Profilschiene mittels beispielsweise einer geschlossenen Seilschleife auf- und abbewegbar ist. Die Seilschleife umschlingt eine Seiltrommel die über beispielsweise ein Schneckengetriebe von dem Elektromotor in einer kompakten Antriebsvorrichtung angetrieben wird, die neben dem Elektromotor und dem Schneckengetriebe die Seiltrommel aufweisen kann und an tragenden Teilen des Inneren der Fahrzeugtür, beispielsweise einer Trägerplatte, ebenso wie die Profilschiene befestigt ist.

Alternativ hierzu kann die Antriebsvorrichtung zum Betätigen eines Kreuzarmfensterhebers oder anderer Verstelleinrichtungen des Kraftfahrzeugs, beispielsweise einer Sitzlängsverstellung, verwendet werden.

Da unterschiedliche Kräfte zum Heben und Absenken der Fensterscheibe erforderlich sind, ist der Elektromotor mit einer Steuerungsvorrichtung und einer Steuer- und Regelschaltung verbunden, die mit einem Sensor eines Meßsystem zur Bestimmung der Drehzahl oder Position des Elektromotors verbunden ist. Durch die Betätigung eines Bedienschalters wird vom Fahrzeugführer oder Fahrgast die Steuerungsvorrichtung zum Heben oder Absenken der Fensterscheibe angesteuert.

Aus der DE 198 51 455 A1 ist ein Elektronikmodul für eine elektromotorisch betriebene Antriebseinheit bekannt. Die elektronischen Bauelemente sind in einem Elektronikgehäuseteil auf einer Platine verlötet. Zur Steuerung der Antriebseinheit wird ein Relais zum Schalten einer Bestromung eines Motors verwendet.

In der EP 0 474 904 ist ein zuvor beschriebenes Elektronikmodul in einem Getriebegehäuse integriert. Auch hier wird zur Steuerung der Bestromung eines Elektromotors ein Relais geschaltet.

Für Fensterhebersysteme wird das Drehmoment oder die Drehgeschwindigkeit der elektromechanischen Antriebsvorrichtung durch eine Steuerungsvorrichtung geregelt. Eine derartige Regelung ist aus der DE 198 23 376 A1 bekannt, wobei die Halbleiterschaltung mit einer Halbleiter-Brückenschaltung versehen ist. Eine Halbleiter-Brückenschaltung nutzt im allgemeinen vier Leistungshalbleiter zum Schalten des Stromes, so dass der Motor für beide Drehrichtungen angesteuert werden kann.

Sollen die Leistungshalbleiter in einer thermisch schlecht leitenden Umgebung angeordnet werden, müssen die Leistungshalbleiter gegen thermische Überlast gesichert werden. Ist die Temperatur im Leistungshalbleiter zu groß, kann beispielsweise ein Lawinendurchbruch zur Zerstörung des Bauelementes führen. Um die Erwärmung des Leistunghalbleiters gering zu halten, muss der Einschaltwiderstand beispielsweise durch die Parallelschaltung mehrerer Transistoren begrenzt werden. Für kleine Einschaltwiderstände werden jedoch entsprechend große Transistormatrizen benötigt, mit der entsprechend großen Menge nötigen Siliziums.

Aus der US-A-5,315,194 ist eine elektromechanische Antriebsvorrichtung für einen elektrischen Fensterheber mit einem Elektromotor und einem Getriebe zum Antrieb einer Spindel bekannt, die eine Elektronikeinheit mit einer integrierten Schaltung zur Stromversorgung und Steuerung des Elektromotors enthält. Der Elektromotor ist in einem zylindrischen Teil und die Elektronikeinheit in einem integral mit dem zylindrischen Teil eines einstückig ausgebildeten Gehäuses der Antriebsvorrichtung angeordnet. Die Leistungskomponenten der Elektronikeinheit befinden sich in direktem thermischem Kontakt mit dem die Elektronikeinheit aufnehmenden Teil des Getriebegehäuses, das aus einem thermisch leitfähigen Metall zur Abfuhr der von den Leistungskomponenten abgegebenen Wärme besteht, die auf einer den Nuten der Seitenwände des Getriebegehäuses eingeschobenen gedruckten Schaltung angeordnet sind. Dabei kontaktieren die Leistungskomponenten der integrierten Schaltung zur Verbesserung der Wärmeabfuhr die Innenseiten der Seitenwände und werden durch Blattfedern in ihrer Position gehalten.

Um die Stabilität des Getriebegehäuses zu gewährleisten, müssen die die gedruckte Schaltung mit den Leistungskomponenten aufnehmenden Seitenwände des Getriebegehäuses entsprechend stark ausgebildet sein und der thermische Kontakt zwischen den Leistungskomponenten und der die Verlustwärme der Leistungskomponenten abführenden Wand des Getriebegehäuses durch zusätzliche Blattfedern hergestellt werden. Der dabei auftretende Wärmeübergangswiderstand ist wegen der den Stabilitätsanforderungen genügenden Seitenwand des Getriebegehäuses vergleichsweise groß, so dass die Wärmeabfuhr nicht optimal ist.

Aus der FR-A-2 766 301 ist eine Wärmeableitvorrichtung für die elektronischen Komponenten einer Steuerungsvorrichtung für einen Elektromotor einer Verstelleinrichtung für Kraftfahrzeuge bekannt, die einteilig mit einem Deckel verbunden ist, der Teil des Gehäuses des Elektromotors ist. Die aus mehreren parallel zueinander angeordneten Rippen bestehende Wärmeableitvorrichtung steht dabei seitlich vom Motorgehäuse ab und beansprucht entsprechend großen Bauraum, um die von den Leistungshalbleitern der Steuerungsvorrichtung, die ebenfalls radial außerhalb des Motorgehäuses positioniert sind, abgegebene Verlustwärme abzuführen.

Der Erfindung liegt daher die Aufgabe zu Grunde, eine elektromechanische Antriebsvorrichtung für Verstelleinrichtungen eines Kraftfahrzeugs anzugeben, bei der die von den Leistungshalbleitern der Steuerungsvorrichtung zur Steuerung des Elektromotors abgegebene Verlustwärme ohne Beanspruchung zusätzlichen Bauraums oder Herabsetzung der mechanischen Stabilität des Getriebegehäuses verbessert abgeführt wird.

Diese Aufgabe wird durch eine elektromechanische Antriebsvorrichtung mit den Merkmalen des Patentanspruchs 1 gelöst. Vorteilhafte Weiterbildungen der Erfindung sind den Unteransprüchen zu entnehmen.

Dementsprechend weist die elektromechanische Antriebsvorrichtung ein Getriebe mit einem Getriebegehäuse, vorteilhafterweise aus Kunststoff, einen mit dem Getriebe mechanisch verbundenen Elektromotor, eine im Getriebegehäuse angeordnete Steuerungsvorrichtung mit mindestens einem Leistungshalbleiter zur Steuerung des Elektromotors, und ein mit dem Leistungshalbleiter thermisch gekoppeltes Wärmeableitmittel als Wärmesenke zur Ableitung der Verlustwärme des Leistungshalbleiters auf. Das Wärmeableitmittel, das als Wärmesenke die Verlustwärme des Leistungshalbleiter vom Leistungshalbleiter ableitet, ist in das Getriebegehäuse integriert, indem es an einer Wand des Getriebegehäuses positioniert ist, die gegenüber den tragenden Teilen des Getriebegehäuses dünnwandiger ist.

Durch die Positionierung des Wärmeableitmittels an einer Wand des Getriebegehäuses zu positionieren, die gegenüber den tragenden Teilen des Getriebegehäuses dünnwandiger ist, wird der Wärmeübergangswiderstand minimiert, ohne dass die mechanische Stabilität des Getriebegehäuses herabgesetzt wird. Durch diesen Synergieeffekt wird kein zusätzlicher Bauraum für die Integration des Wärmeableitmittels in das Getriebegehäuse benötigt und gleichzeitig die Wärmeabfuhr optimiert. Hierzu weist die Wand beispielsweise eine Dicke von weniger als einen Millimeter auf.

So können Leistungshalbleiter mit einem größeren Einschaltwiderstand verwendet werden, da die am Einschaltwiderstand entstehende Verlustwärme durch das Wärmeableitmittel als Wärmesenke abgeleitet werden kann und ein Wärmestau, der in der Nähe des Leistungshalbleiters zur Zerstörung der Halbleiterstruktur führen könnte, verhindert wird. Mit der Integration des Wärmeableitmittel zur Ableitung der Verlustwärme in das Getriebegehäuse können durch das Wärmeableitmittel weitere, über die Funktion als Wärmesenke hinausgehende, mechanische oder thermische Funktionen übernommen werden.

Als Leistungshalbleiter wird beispielsweise ein HVMOS-Transistor (High-Voltage-MetallOxide-Semiconductor) verwendet. Unter Leistungshalbleiter sind aber auch alle anderen Arten von Leistungshalbleitern zu verstehen, wie zum Beispiel Bipolartransistoren oder Thyristoren.

In einer vorteilhaften Ausgestaltung der Erfindung werden das Wärmeableitmittel und ein Gehäuse des Leistungshalbleiters zur Kopplung aneinander kraftschlüssig befestigt. Durch die kraftschlüssige Befestigung wird der Kontakt zwischen dem Leistungshalbleitergehäuse und dem Wärmeableitmittel sichergestellt, so dass ein Wärmeübergangswiderstand zwischen dem Gehäuse und dem Wärmeableitmittel für eine verbesserte Kopplung reduziert ist. Zur kraftschlüssigen Befestigung werden Befestigungselemente, wie beispielsweise Schraub- oder Nietverbindungen, verwendet, oder vorteilhafterweise ist das Wärmeableitmittel durch ein Federelement, beispielsweise eine in das Getriebegehäuse integrierte Blattfeder, angefedert.

Zur thermischen Kopplung wird zwischen dem Wärmeableitmittel und einem Gehäuse des Leistungshalbleiters ein Wärmeleitmittel angeordnet. Das Wärmeleitmittel ist beispielsweise eine Wärmeleitpaste oder ein komprimierbarer Festkörper, um Unebenheiten und Toleranzen einer Oberfläche des Wärmeableitmittels oder des Gehäuses auszugleichen.

In einer Weiterbildung der Erfindung weist das Getriebegehäuse eine Öffnung zum Einführen des Wärmeableitmittels und Führungselemente zur Positionierung des Wärmeableitmittels in einer Endposition auf. In dieser Endposition wird das Wärmeableitmittel durch ein Befestigungselement, beispielsweise eine Verrastung befestigt. Eine Verrastung läßt sich vorteilhaft in das Getriebegehäuse integrieren, so dass keine zusätzlichen separaten Befestigungselemente notwendig sind. In der Endposition wird beispielsweise das Wärmeableitmittel mit dem bereits positionierten Leistungshalbleitergehäuse kontaktiert und damit thermisch gekoppelt. Alternativ ist das Wärmeableitmittel in der Endposition positioniert und der Kontakt wird durch die Positionierung des Leistungshalbleitergehäuses hergestellt. Durch beispielsweise mit dem Getriebegehäuse einstückig hergestellte Führungselemente ist die Position des Wärmeableitmittels und des Leistungshalbleitergehäuses zueinander bestimmt.

Eine alternative Weiterbildung sieht vorteilhafterweise vor, dass das Wärmeableitmittel in dem Getriebegehäuse zumindest teilweise umspritzt ist, wobei das Getriebegehäuse als Kunststoffgehäuse spritzgegossen wird. Mit dem Wärmeableitmittel wird vorteilhafterweise zusätzlich die Steuerungsvorrichtung mit den umspritzbaren Teilen umspritzt und zuvor der Leistungshalbleiter, beispielsweise mittels einer Lötung, mit dem Wärmeableitmittel thermisch gekoppelt. Teile des Wärmeableitmittels werden beispielsweise nicht umspritzt, um eine gute Abgabe der Wärme aus dem kunststoffgespritzten Getriebegehäuse zu verbessern.

Alternativ zu der zuvor genannten Weiterbildung der Erfindung ist das Wärmeableitmittel im Getriebegehäuse hermetisch gegen Flüssigkeiten und Staubpartikel eingeschlossen, um eine Verschmutzung der Gehäuseinnenseite zu verhindern, ohne eine zusätzliche Abdichtung für das Wärmeableitmittel anzuordnen.

In einer vorteilhaften Weiterbildung der Erfindung weist das Wärmeableitmittel eine weitere thermische Kopplung zu einem Kühlelement, beispielsweise dem Blech eines Türmoduls oder einem Metallgestell eines Kraftfahrzeugsitzes, auf dem das Getriebegehäuse der Antriebsvorrichtung befestigt ist, auf. Das Wärmeableitmittel ist in diesem Fall ein Wärmeleiter, der auf dem Kühlelement, beispielsweise einer Trägerplatte, befestigt ist und die abzuleitende Wärme über eine weitere thermische Kopplung an das Kühlelement weiterleitet. Der Wärmeleiter besteht vorteilhaft aus Aluminium oder Kupfer oder einem anderen gut wärmeleitenden Material.

Eine vorteilhafte Ausgestaltung der zuvor genannten Weiterbildung der Erfindung weist eine mechanische Verbindung zwischen dem Wärmeableitmittel und dem Getriebegehäuse auf, und in das Wärmeableitmittel ist ein Befestigungselement zur Befestigung des Getriebegehäuses auf der Trägerplatte integriert. Ein Befestigungselement ist beispielsweise eine Öffnung als Verschraubungspunkt oder ein Stufenbolzen mit einem Schraubengewinde. Durch die mechanische Verbindung wird die Stabilität des Getriebegehäuses vorteilhafterweise erhöht.

In einer vorteilhaften Weiterbildung der Erfindung ist in dem Wärmeableitmittel ein Lager für ein Getriebeelement des Getriebes integriert. Das Lager ist beispielsweise ein aus dem Wärmeableitmittel geformter Lagerzapfen, auf dem eine Lagerbuchse, die beispielsweise auf der Welle der Schnecke eines Schneckengetriebes angeordnet wird, gleitet. Zusätzlich ist vorteilhafterweise eine Befestigung, beispielsweise mittels Stoffschluß, des Wärmeableitmittels im Getriebegehäuse zur Aufnahme der auf das Lager wirkenden Kräfte vorhanden. Das Wärmeableitmittel ist beispielsweise ein Metall oder eine Metallegierung, auf dem die Lagerbuchse gleitet. Es ist aber darüber hinaus auch die Integration der anderen Lagerarten, wie Lochlager, Stützlager oder Festlager, möglich.

In einer Ausgestaltung weist das Wärmeableitmittel Positionierungselemente zur Positionierung der Steuerungsvorrichtung zum Getriebeelement oder zu einem an dem Getriebeelement befestigten Magneten auf. Als Positionierungselemente eignen sich beispielsweise gestanzte oder gebogene Flächen oder Kanten des Wärmeableitmittels. Um eine exakte Lage der Positionierungselemente zum Getriebeelemente sicherzustellen, werden die Positionierungselemente mit dem Lager im selben Arbeitsgang gefertigt, beispielsweise gestanzt.

Eine Weiterbildung der Erfindung sieht vorteilhafterweise vor, dass eine Öffnung des Getriebegehäuses durch das Wärmeableitmittel geschlossen ist. Das Wärmeableitmittel ist in dieser Weiterbildung ein gut wärmeleitender, metallischer Kühldeckel, der vorteilhafterweise Kühlrippen zur verbesserten Abgabe der Wärme an die umgebende Luft aufweist. Die Öffnung ist durch einen Stoffschluß zwischen dem Kühldeckel und dem Rand der Öffnung gedichtet, dabei wird der Stoffschluß beispielsweise durch einen Klebstoff zum Verkleben des Kühldeckels mit dem Rand der Öffnung hergestellt.

In einer weiteren vorteilhaften Weiterbildung der Erfindung sind auf dem Wärmeableitmittel von einander isolierte Leiterbahnen zur Verbindung von Bauelementen, beispielsweise dem Leistungshalbleiter, und Schnittstellen der Steuerungsvorrichtung angeordnet. Die Schnittstellen der Steuerungsvorrichtung sind beispielsweise die Schnittstellen zu den Elektromotorkontakten, zu Funktionseinheiten des Kraftfahrzeugs oder zu einem Sensor. Die Leiterbahnen werden beispielsweise durch die Strukturierung eines Metalles hergestellt.

Für eine weitere Möglichkeit der Integration des Wärmeableitmittels in das Getriebegehäuse ist das Wärmeableitmittel als Teil eines Steckers eines antriebsvorrrichtungsseitigen Anschlußelementes einer Leitungsverbindung ausgebildet. Das Wärmeableitmittel ist hierzu beispielsweise ein metallischer Steckerkragen, der zugleich als Schirmung für Signalleitungen nutzbar ist.

Im Folgenden wird die Erfindung anhand von Ausführungsbeispielen bezugnehmend auf zeichnerische Darstellungen näher erläutert. Dabei zeigen
- FIG 1: eine elektromechanische Antriebsvorrichtung mit einem Kühldeckel,
- FIG 1a: eine schematische Schnittansicht der Antriebsvorrichtung,
- FIG 2a und 2b: schematische Schnittansichten einer Ausführung des Wärmeableitmittels als mechanisch bistabiles Element,
- FIG 3: eine elektromechanische Antriebsvorrichtung mit einem Wärmeleiter,
- FIG 3a und 3b: Detailansichten der elektromechanischen Antriebsvorrichtung mit einem Wärmeleiter,
- FIG 4: eine elektromechanische Antriebsvorrichtung mit eingespritztem Wärmeleiter,
- FIG 4a und 4b: Darstellungen verschiedener Ausführungsformen des Wärmeübergangs des Wärmeleiters und
- FIG 5: eine Darstellung der Doppelfunktion des Wärmeleiters als Lager der Schneckenwelle.

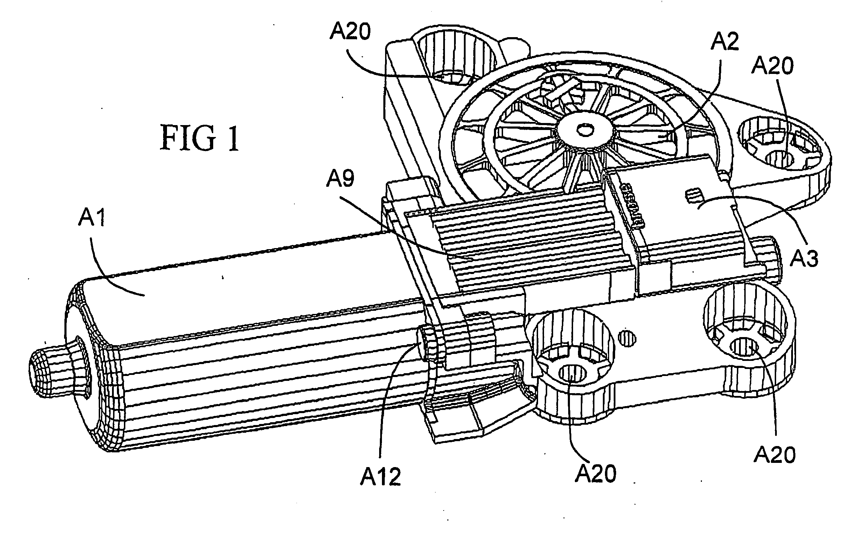

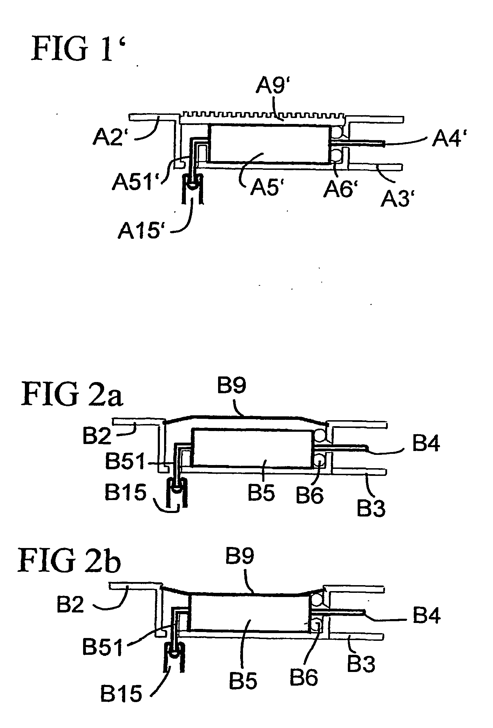

In den FIG 1 und 1a ist ein Ausführungsbeispiel einer elektromechanischen Antriebsvorrichtung eines Fensterhebers dargestellt. Ein Elektromotor A1, hier beispielsweise ein Kommutatormotor A1, ist mit einem Getriebe mechanisch verbunden. Das Gehäuse des Elektromotors A1 ist an dem Getriebegehäuse A2, A2' durch eine Verschraubung A12 des Elektromotors A1 mit dem Getriebegehäuse A2, A2' befestigt. Das Getriebegehäuse A2, A2' ist in diesem Ausführungsbeispiel ein Kunststoffspritzgußgehäuse, alternativ ist auch ein metallisches Gehäuse denkbar. Das Getriebegehäuse A2, A2' weist mehrere Verschraubungspunkte A20 auf, durch deren Öffnung das Getriebegehäuse A2, A2' an einer, in FIG 1 nicht dargestellten, Trägerplatte angeschraubt wird.

Ein Abtriebsritzel wird durch eine in FIG 1a nicht dargestellte Öffnung der Trägerplatte geführt, auf dem eine, in ebenfalls FIG 1a nicht dargestellte, Seiltrommel befestigt ist, über die ein Seil eines Fensterhebers angetrieben wird. Innerhalb des Getriebegehäuses A2, A2' ist ein Getriebe, in FIG 1 und 1a nicht dargestellt, angeordnet. Das Getriebe besteht beispielsweise aus einer mit der Achse des Elektromotors A1 verbundenen Schnecke, die ein mit dem Abtriebsritzel verbundenes Schneckenrad antreibt.

Zur Steuerung des Elektromotors A1 ist in das Getriebegehäuse A2, A2' eine Steuerungsvorrichtung A5' integriert. Die Steuerungsvorrichtung A5' ist über ein antriebsvorrichtungsseitiges Anschlußelement einer Leitungsverbindung mit weiteren (nicht dargestellten) Funktionseinheiten des Kraftfahrzeugs, beispielsweise einem Türsteuergerät oder einer Batterie, elektrisch oder optisch verbunden. Das antriebsvorrichtungsseitige Anschlußelement weist einen Steckerkragen A3 und Kontaktelemente A4' auf. Der Steckerkragen A3 ist mit dem spritzgegossenen Getriebegehäuse einstückig ausgebildet.

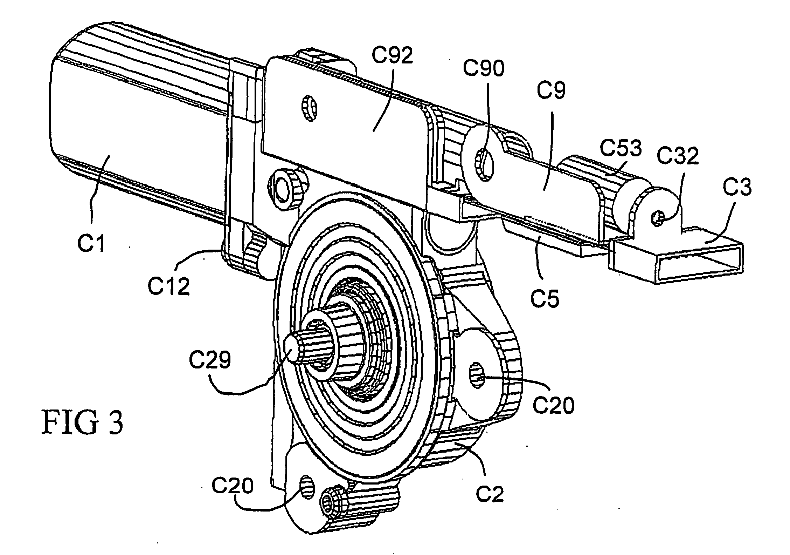

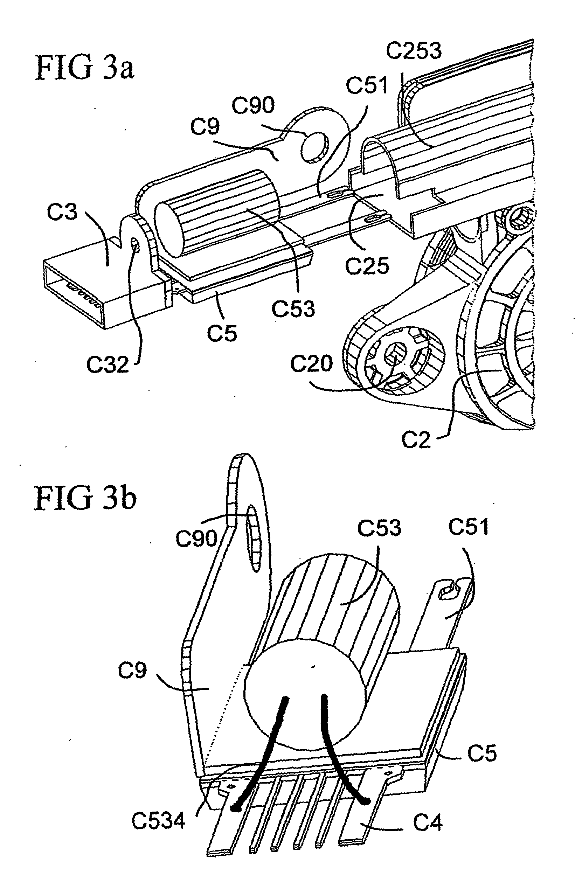

Durch eine Seitenöffnung C25 (FIG 3a) des Getriebegehäuses A2, A2' wird die Steuerungsvorrichtung A5' positioniert. Mit der Positionierung der Steuerungsvorrichtung A5' werden die Motorkontakte A51 mit dem Elektromotor A1 kontaktiert. Um die Verlustwärme des in der Steuerungsvorrichtung A5' integrierten Leistungshalbleiters, eines HVMOS-Transistors, abzuleiten wird die Steuerungsvorrichtung A5' mit einem Wärmeableitmittell A9 als Wärmesenke thermisch gekoppelt. Das Wärmeableitmittel ist in diesem Fall ein Kühldeckel A9, der zahlreiche Kühlrippen aufweist. Die Kühlrippen ermöglichen eine schnelle Abgabe der von dem Kühldeckel aufgenommenen Verlustwärme an die umgebende Luft. Der Kühldeckel A9, A9' wird durch Ultraschallschweißen so weit in die Öffnung C25 des Getriebegehäuses A2, A2' eingeschweißt, dass mit einem Kontakt des Kühldeckels A9, A9' mit der Steuerungsvorrichtung A5' eine gute thermische Kopplung sichergestellt ist.

In FIG 1a ist eine schematische Schnittdarstellung einer Antriebsvorrichtung dargestellt. Im Getriebegehäuse A2' ist die Steuerungsvorrichtung A5' mit den Motorkontakten A51' und den Kontaktstiften A4' des antriebsvorrichtungsseitigen Anschlußelementes durch die Ausbildung des Getriebegehäuses A2', des Steckerkragens A3' und der Motoranschlüsse A15' so angeordnet, dass der Kühldeckel A9' bei einem Einsetzen in das Getriebegehäuse A2' mit der Steuerungsvorrichtung A5' einen guten thermischen Kontakt aufweist und der Kühldeckel A9' mit dem Getriebegehäuse A2' nur durch einen Kleber stoffschlüssig befestigt werden muß. Der Kleber bildet in Doppelfunktion ein Dichtelement, zur Dichtung des Inneren des Getriebegehäuses A2'.

In FIG 2a und FIG 2b ist das Wärmeableitmittel B9 als mechanisch bistabiler Kühldeckel B9 ausgebildet dargestellt. In einem ersten Schritt wird die Steuerungsvorrichtung B5 mit den Kontaktstiften und den Motorkontakten B51 sowie einem Dichtgummi B6 zur Dichtung des Steckerkragens B3 im Steckerkragen B3 und dem Getriebegehäuse B2 positioniert. In einem zweiten Schritt wird der mechanisch bistabile Kühldeckel B9 in dem Getriebegehäuse B2 befestigt. Im dritten Schritt wird der mechanisch bistabile Kühldeckel B9 von einem ersten mechanisch stabilen Zustand in einen zweiten mechanisch stabilen Zustand bewegt, um das Wärmeableitmittel B9 durch einen Kontakt im zweiten mechanisch stabilen Zustand mit dem Gehäuse (B5) des Leistungshalbleiters thermisch zu koppeln.

In FIG 3 ist eine elektromechanische Antriebsvorrichtung mit einem Wärmeleiter C9 dargestellt. Der Wärmeleiter C9 ist in diesem Fall als Kühlwinkel ausgebildet. Die Antriebsvorrichtung in FIG 3 wird analog der Antriebsvorrichtung aus FIG 1 an einer Trägerplatte befestigt. Die Trägerplatte ist oft aus einem Metall, um die mechanische Stabilität des Fensterhebers zu gewährleisten. Aufgabe des Wärmeleiters C9 ist es folglich, die Verlustwärme des Leistungshalbleiters auf die metallische Trägerplatte abzuleiten.

Hierzu weist der Wärmeleiter C9 zwei thermische Kopplungen, einmal zum in der Steuerungsvorrichtung C5 integrierten Leistungshalbleiter und zum anderen zur Trägerplatte auf. In FIG 3 ist eine Einschublösung zur Integration des Wärmeleiters C9 in das Getriebegehäuse C2 dargestellt. Der Wärmeleiter C9 ist mit der Steuerungsvorrichtung C5 vor dem Einschieben bereits thermisch gekoppelt, indem der Wärmeleiter C9 mit der Steuerungsvorrichtung C5 stoffschlüssig, beispielsweise durch Anlöten, verbunden ist. An der Steuerungsvorrichtung C5 ist zusätzlich vorteilhafterweise ein Entstörelement C53, hier beispielsweise ein Elektrolytkondensator C53, angeschlossen, beispielsweise angelötet.

An der Stelle, wo die thermische Kopplung zwischen dem Wärmeleiter C9 und der Trägerplatte einen möglichst geringen thermischen Widerstand erfordert, ist die Wand C92 des Getriebegehäuses C2 entsprechend dünn, weniger als einen Millimeter, ausgelegt.

In FIG 3a und 3b sind Detailansichten der elektromechanischen Antriebsvorrichtung dargestellt. Die Steuerungsvorrichtung C5 weist die Motorkontakte C51 zur Kontaktierung des Elektromotors C1 (FIG 3) und Kontaktstifte C4 für einen Stecker auf. An die Kontaktstifte C4 ist ein Elektrolytkondensator C53 mit seinen beiden Anschlüssen C534 angelötet. Zur thermischen Kopplung des in der Steuerungsvorrichtung C5 integrierten Leistungshalbleiters mit dem als Wärmeleiter C9 ausgebildeten Kühlwinkel C9 ist der Kühlwinkel C9 mit dem Gehäuse der Steuerungsvorrichtung C5 stoffschlüssig verbunden. Diese Einheit aus Steuerungsvorrichtung C5, Entstörelement C53 und Kühlwinkel C9 wird in die Öffnung C25 des Getriebegehäuses C2 eingeschoben und anschließend ein Steckerkragen C3 aufgesetzt und die Einheit im Getriebegehäuse C2 durch eine Vergußmasse vergossen.

Zur zusätzlichen Befestigung ist in dem Kühlwinkel C9 eine Verschraubungsöffnung C90 als Befestigungselement integriert. Durch die Verschraubungsöffnung C90 wird die Antriebsvorrichtung mit der Trägerplatte durch eine Schraube verschraubt. Das Metall des Kühlwinkels C9 stabilisiert das Getriebegehäuse C2 dabei zusätzlich. Als Befestigungselement C90 sind auch alle anderen Arten von Befestigungselementen, beispielsweise ein Gewindebolzen, integrierbar.

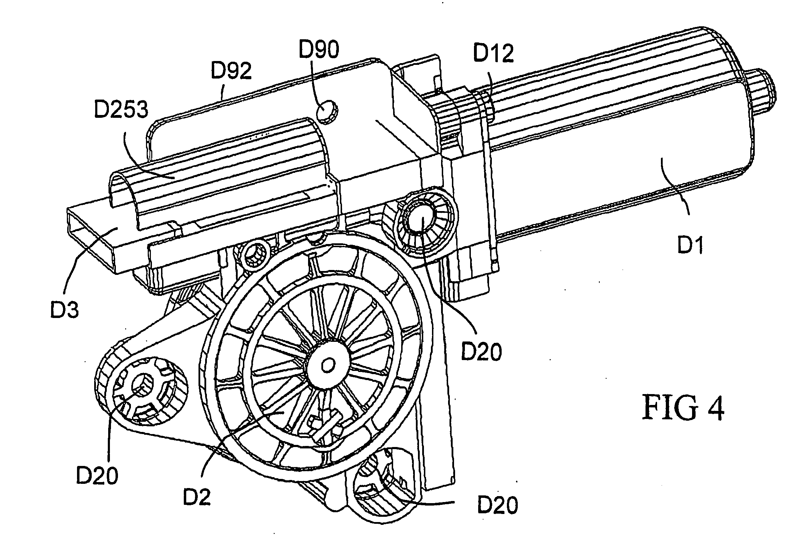

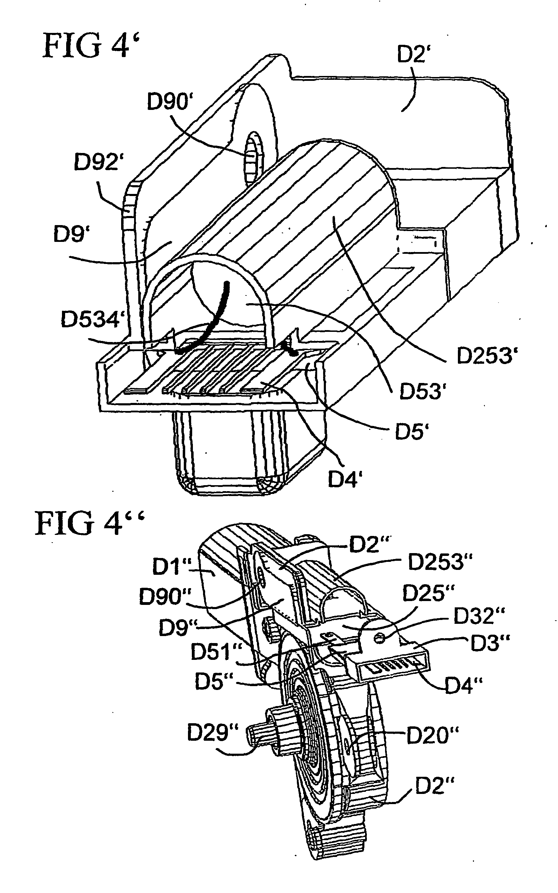

In FIG 4 ist eine zur Antriebsvorrichtung aus FIG 3 sehr ähnliche elektromechanische Antriebsvorrichtung dargestellt. In dem Fall von FIG 4 ist das Getriebegehäuse D2 ohne einen Einschub für die Steuerungselektronik mit dem Steckerkragen D3 einstückig aus Kunststoff ausgebildet. Die FIG 4a und die FIG 4b stellen zwei Möglichkeiten der thermischen Kopplung zwischen dem Kühlwinkel D9', D9" und der Trägerplatte dar. In FIG 4a ist der Kühlwinkel D9' mit der Steuerungsvorrichtung D5' in das Getriebegehäuse D2' mit eingespritzt. Der Elektrolytkondensator D53' ist nachträglich in das Gehäuse D253' eingeführt und die Anschlüsse D534' des Elektrolytkondensator D53' sind mit den Kontaktstiften D4' verlötet. Der Elektrolytkondensator D53' wird alternativ mit Steckkontakten kontaktiert. Der Kühlwinkel D9' ist in eine dünne Wand D92' des Getriebegehäuses mit eingespritzt.

In der FIG 4b ist der Kühlwinkel D9" dagegen auf der Seite der Trägerplatte nicht mit dem Kunststoff des Getriebegehäuses D2" umspritzt. Die dem Gehäuse D253" des Elektrolytkondensators (siehe FIG 4' als D53') zugewandte Seite ist durch Kunststoff des Getriebegehäuses D2" gestützt, um die mechanische Stabilität des im Kühlwinkel D9" integrierten Anschraubpunktes D90" zu erhöhen. In FIG 4b ist lediglich der Kühlwinkel D9" eingespritzt, während die Steuerungsvorrichtung D5" in die Öffnung D25" des Getriebegehäuses D2" eingeschoben und durch Kühlwinkel D9" als Führungselement D9" positioniert wird.

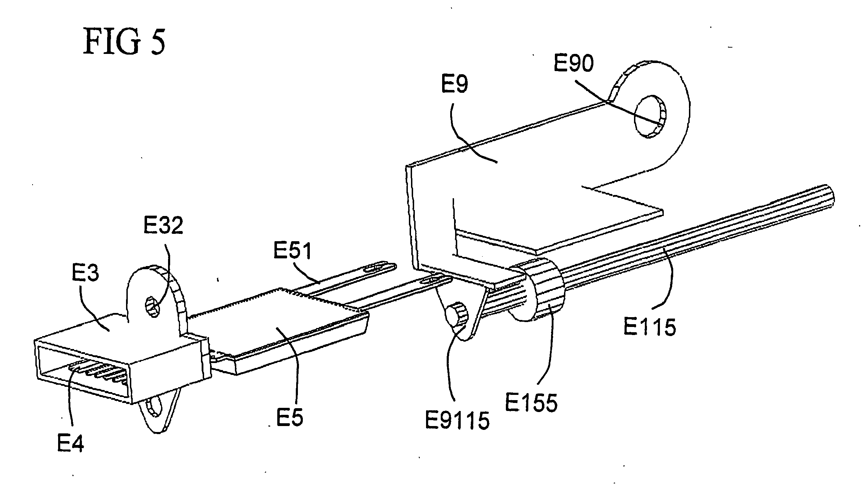

In FIG 5 ist die Integration eines Lagers E9115 in einem Kühlwinkel E9 dargestellt. In dem Lager E9115, in diesem Fall ein Lochlager, ist die Welle E115 einer in FIG 5 nicht dargestellten Schnecke gleitend gelagert. Um eine feste Position im Getriebegehäuse (D2", analog zu FIG 4b) zur gewährleisten wird der Kühlwinkel E9 zumindest teilweise in das Getriebegehäuse (D2") mit eingespritzt. Die Legierung des Kühlwinkels E9 ist auf die Legierung der Welle E115 abgestimmt, um die Gleiteigenschaften zu optimieren.

Auf der Welle E115 ist zu einer Fläche des Kühlwinkels E9 positioniert ein Hallmagnet E155 angeordnet. Zwischen dem Hallmagneten E155 und der Fläche des Kühlwinkels E9 wird die Steuerungsvorrichtung E5 eingeschoben und so positioniert, dass eine thermische Kopplung durch guten Kontakt zur Fläche des Kühlwinkels E9 und eine genaue Positionierung zum Hallmagneten E155 erfolgt. Mit Positionierung wird die Interaktion der in der Steuerungsvorrichtung E5 integrierten Hallsensoren zum Hallmagnet optimiert. Um die Steuerungsvorrichtung E5 entsprechend optimal zu positionieren, sind im Kühlwinkel E9 Flächen als Führungselemente zur Führung der einzuschiebenden Steuerungsvorrichtung E5 vorgesehen.

## Patentansprüche

1. Elektromechanische Antriebsvorrichtung für Verstelleinrichtungen eines Kraftfahrzeugs, insbesondere für einen Fensterheber, der ein Getriebe mit einem Getriebegehäuse (A2,C2,D2,D2',D2"), einen mit dem Getriebe mechanisch verbundenen Elektromotor (A1,C1,D1,D1"), eine im Getriebegehäuse (A2,C2,D2,D2',D2") angeordnete Steuerungsvorrichtung (A5,A5',B5,C5,D5',D5",E5) mit mindestens einem Leistungshalbleiter zur Steuerung des Elektromotors (A1,C1,D1,D1") und ein mit dem Leistungshalbleiter thermisch gekoppeltes Wärmeableitmittel (A9,A9',C9,D9,D9',D9",E9) als Wärmesenke zur Ableitung von Verlustwärme des Leistungshalbleiters aufweist,
**dadurch gekennzeichnet,**
**dass** das Wärmeableitmittel (A9,A9',C9,D9,D9',D9",E9) an einer Wand (C92,D92,D92') des Getriebegehäuses (A2,C2,D2,D2',D2") positioniert ist, die gegenüber den tragenden Teilen des Getriebegehäuses (A2,C2,D2,D2',D2") dünnwandiger ist.

2. Elektromechanische Antriebsvorrichtung nach Anspruch 1, **dadurch gekennzeichnet, dass** das Getriebegehäuse (A2,C2,D2,D2',D2") eine Öffnung (A25,C93) zum Einführen des Wärmeableitmittels (A9,A9',C9,D9,D9',D9",E9) und Führungselemente zur Positionierung des Wärmeableitmittels (A9,C9,D9,D9',D9",E9) in einer Endposition aufweist.

3. Elektromechanische Antriebsvorrichtung nach Anspruch 2, **dadurch gekennzeichnet, dass** das in das Getriebegehäuse (A2,C2,D2,D2',D2") eingeführte Wärmeableitmittel (A9, A9',C9,D9,D9',D9",E9) in der Endposition verrastbar ist.

4. Elektromechanische Antriebsvorrichtung nach einem der Ansprüche 1 bis 3, **dadurch gekennzeichnet, dass** das Wärmeableitmittel (C9,D9,D9',D9",E9) in einem spritzgegossenen Kunststoffgehäuse (C2,D2,D2',D2") des Getriebes zumindest teilweise umspritzt ist.

5. Elektromechanische Antriebsvorrichtung nach mindestens einem der voranstehenden Ansprüche, **dadurch gekennzeichnet, dass** das Wärmeableitmittel als Kühlwinkel (C9,D9,D9',D9",E9) ausgebildet ist, und dass eine Fläche des Kühlwinkels (C9,D9,D9',D9",E9) eine thermische Kopplung zu dem Leistungshalbleiter aufweist und die andere Fläche mit einem Teil des Getriebegehäuses (A2,C2,D2,D2',D2") verbunden ist.

6. Elektromechanische Antriebsvorrichtung nach Anspruch 5, **dadurch gekennzeichnet, dass** der Kühlwinkel (C9,D9,D9',D9",E9) stoffschlüssig mit dem Gehäuse der Steuerungsvorrichtung (C5) verbunden ist.

7. Elektromechanische Antriebsvorrichtung nach Anspruch 5 oder 6, **dadurch gekennzeichnet, dass** der Kühlwinkel (C9,D9,D9',D9",E9) in der Wand (C92,D92,D92') des Getriebegehäuses (C2,D2,D2') hermetisch gegen Flüssigkeiten und Staubpartikel eingeschlossen ist.

8. Elektromechanische Antriebsvorrichtung nach einem der Ansprüche 5 bis 7, **dadurch gekennzeichnet, dass** der Kühlwinkel (C9,D9,D9',D9",E9) auf der Seite der Trägerplatte nicht mit dem Kunststoff des Getriebegehäuses (A2,C2,D2,D2',D2") umspritzt ist und dass die dem Gehäuse eines an die Steuerungsvorrichtung (A5,A5',B5,C5,D5',D5",E5) angeschlossenen Bauelements, insbesondere eines E-lektrolytkondensators (C53), zugewandte Seite des Kühlwinkels (C9,D9,D9',D9",E9) durch das Getriebegehäuse (A2,C2,D2,D2',D2") gestützt ist und die mechanische Stabilität eines in dem Kühlwinkel (C9,D9,D9',D9",E9) integrierten, als Befestigungselement dienenden Anschraubpunktes (C90,D90,D90',D90",E90) erhöht.

9. Elektromechanische Antriebsvorrichtung nach mindestens einem der voranstehenden Ansprüche, **dadurch gekennzeichnet, dass** das Wärmeableitmittel (C9,D9,D9',D9",E9) als Wärmeleiter eine weitere thermische Kopplung mit einem Kühlelement zur Abgabe der vom Leistungshalbleiter abgeleiteten Verlustwärme an das Kühlelement aufweist, und dass das Kühlelement insbesondere eine Trägerplatte ist, auf der das Getriebegehäuse (C2,D2,D2',D2") befestigt ist.

10. Elektromechanische Antriebsvorrichtung nach Anspruch 9, **gekennzeichnet durch** eine mechanische Verbindung zwischen dem Wärmeableitmittel (C9,D9,D9',D9",E9) und dem Getriebegehäuse (C2,D2,D2',D2") und ein in das Wärmeableitmittel (A9,C9,D9,D9',D9",E9) integriertes Befestigungselement (C90,D90,D90',D90",E90) zur Befestigung des Getriebegehäuses (A2,C2,D2,D2',D2") auf dem Kühlelement.

11. Elektromechanische Antriebsvorrichtung nach Anspruch 9, **dadurch gekennzeichnet, dass** die Steuerungsvorrichtung (A5,A5',B5,C5,D5',D5",E5) durch eine Öffnung (A25) des Getriebegehäuses (A2,C2,D2,D2',D2") eingeschoben und durch ein als Kühldeckel (A9,A9') mit Kühlrippen ausgebildete Wärmeableitmittel geschlossen ist.

12. Elektromechanische Antriebsvorrichtung nach Anspruch 11, **dadurch gekennzeichnet, dass** die Öffnung (A25) durch einen Stoffschluß, insbesondere durch
- ein Ultraschallverschweißen des Kühldeckels (A9,A9',B9) mit einem Rand der Öffnung (A25), oder
- ein Verkleben des Kühldeckels (A9,A9',B9) mit einem Rand der Öffnung (A25) durch einen Klebstoff,
zwischen dem Kühldeckel (A9,A9',B9) und einem Rand der Öffnung (A25) gedichtet ist

13. Elektromechanische Antriebsvorrichtung nach mindestens einem der voranstehenden Ansprüche, **dadurch gekennzeichnet, dass** in dem Wärmeableitmittel (A9,C9,D9,D9',D9",E9) ein Lager (E9115) für ein Getriebeelement des Getriebes integriert ist.

14. Elektromechanische Antriebsvorrichtung nach mindestens einem der voranstehenden Ansprüche, **dadurch gekennzeichnet, dass** das Wärmeableitmittel (E9) Positionierungselemente zur Positionierung der Steuerungsvorrichtung (E5) zum Getriebeelement oder zu einem an dem Getriebeelement befestigten Magneten (E155) aufweist.

15. Elektromechanische Antriebsvorrichtung nach mindestens einem der voranstehenden Ansprüche, **dadurch gekennzeichnet, dass** auf dem Wärmeableitmittel (A9,A9',C9,D9,D9',D9",E9) von einander isolierte Leiterbahnen zur Verbindung von Bauelementen und Schnittstellen der Steuerungsvorrichtung (A5,A5',B5,C5,D5',D5",E5) angeordnet sind.

16. Elektromechanische Antriebsvorrichtung nach Anspruch 15, **dadurch gekennzeichnet, dass** die Leiterbahnen Kontaktelemente aufweisen, die mit der Montage des Wärmeableitmittels (A9,A9',B9,C9,D9,D9',D9",E9) kontaktierbar sind.

## Claims

1. Electro-mechanical drive device for adjustment devices of a motor vehicle, more particularly for a window lifter, which has
a gearing with a gear housing (A2, C2, D2, D2', D2"), an electric motor (A1, C1, D1, D1") mechanically connected to the gearing, a control device (A5, A5', B5, C5, D5', D5", E5) mounted in the gear housing (A2, C2, D2, D2', D2") and having at least one power semi-conductor for controlling the electric motor (A1, C1, D1, D1"), and heat dissipating means (A9, A9', C9, D9, D9', D9", E9) thermally coupled to the power semi-conductor as heat sink for drawing off waste heat from the power semi-conductor,
**characterised in that**
the heat dissipating means (A9, A9', C9, D9, D9', D9", E9) are positioned on a wall (C92, D92, D92') of the gear housing (A2, C2, D2, D2', D2") which is thinner than the supporting parts of the gear housing (A2, C2, D2, D2', D2").

2. Electro-mechanical drive device according to claim 1, **characterised in that** the gear housing (A2, C2, D2, D2',D") has an opening (A25, C93) for inserting the heat dissipating means (A9, A9', C9, D9, D9',D9", E9) and guide elements for positioning the heat dissipating means (A9, C9, D9, D9', D9", E9) in an end position.

3. Electro-mechanical drive device according to claim 2, **characterised in that** the heat dissipating means (A9, A9', C9, D9, D9', D9", E9) inserted in the gear housing (A2, C2, D2, D2', D2") can be locked in the end position.

4. Electro-mechanical drive device according to one of claims 1 to 3, **characterised in that** the heat dissipating means (C9, D9, D9', D9", E9) are injection-moulded at least in part in an injection-moulded plastics housing (C2, D2, D2', D2") of the gearing.

5. Electro-mechanical drive device according to at least one of the preceding claims, **characterised in that** the heat dissipating means are formed as a cooling angle (C9, D9, D9', D9",E9) and that one surface of the cooling angle (C9, D9, D9', D9",E9) has a thermal coupling to the power semi-conductor and the other surface is connected to a part of the gear housing (A2, C2, D2, D2', D2").

6. Electro-mechanical drive device according to claim 5, **characterised in that** the cooling angle (C9, D9, D9', D9", E9) is connected with material bonding to the housing of the control device (C5).

7. Electro-mechanical drive device according to claim 5 or 6, **characterised in that** the cooling angle (C9, D9, D9', D9", E9) is enclosed in the wall (C92, D92, D92') of the gear housing (C2, D2, D2') hermetically sealed against fluids and dust particles.

8. Electro-mechanical drive device according to one of claims 5 to 7, **characterised in that** the cooling angle (C9, D9, D9', D9", E9) on the side of the support plate is not injection moulded with the plastics of the gear housing (A2, C2, D2, D2', D2") and that the side of the cooling angle (C9, D9, D9', D9", E9) facing the housing of a structural element, more particularly an electrolyte capacitor (C53), connected to the control device (A5, A5', B5, C5, D5', D5", E5) is supported by the gear housing (A2, C2, D2, D2', D2") and increases the mechanical stability of a screw-on point (C90, D90, D90', D90", E90) integrated in the cooling angle (C9, D9, D9', D9", E9) and serving as the fastening element.

9. Electro-mechanical drive device according to at least one of the preceding claims, **characterised in that** the heat dissipating means (C9, D9, D9', D9", E9) have as heat conductor a further thermal coupling to a cooling element for discharging the waste heat dissipated from the power semi conductor to the cooling element, and that the cooling element is in particular a support plate on which the gear housing (C2, D2, D2', D2") is fixed.

10. Electro-mechanical drive device according to claim 9, **characterised by** a mechanical connection between the heat dissipating means (C9, D9, D9', D9", E9) and the gear housing (C2, D2, D2', D2") and a fastening element (C90, D90, D90', D90", E90) integrated in the heat dissipating means (A9, C9, D9, D9', D9", E9) for fixing the gear housing ( A2, C2, D2, D2', D2") on the cooling element.

11. Electro-mechanical drive device according to claim 9, **characterised in that** the control device (A5, A5', B5, C5, D5', D5", E5) is pushed through an opening (A25) of the gear housing (A2, C2, D2, D2', D2") and is closed by a heat dissipating means formed as a cooling lid (A9, A9') with cooling ribs.

12. Electro-mechanical drive device according to claim 11, **characterised in that** the opening (A25) is sealed by a material bonded connection between the cooling lid (A9, A9', B9) and an edge of the opening (A25), more particularly by
- ultrasound welding of the cooling lid (A9, A9', B9) to an edge of the opening (A25), or
- sticking the cooling lid (A9, A9', B9) by adhesive to an edge of the opening (A25).

13. Electro-mechanical drive device according to at least one of the preceding claims, **characterised in that** a bearing (E9115) for a gear element of the gearing is integrated in the heat dissipating means (A9, C9, D9, D9', D9", E9).

14. Electro-mechanical drive device according to at least one of the preceding claims, **characterised in that** the heat dissipating means (E9) have positioning elements for positioning the control device (E5) relative to the gear element or relative to a magnet (E155) fixed on the gear element.

15. Electro-mechanical drive device according to at least one of the preceding claims, **characterised in that** conductor panels which are isolated from one another are mounted on the heat dissipating means (A9, A9', C9, D9, D9', D9", E9) to connect structural elements and interfaces of the control device (A5, A5', B5, C5, D5', D5", E5).

16. Electro-mechanical drive device according to claim 15, **characterised in that** the conductor panels have contact elements which can be contacted during fitting of the heat dissipating means (A9, A9', B9, C9, D9, D9', D9", E9).

## Revendications

1. Dispositif d'entraînement électromécanique pour des dispositifs de réglage d'un véhicule automobile, en particulier pour un lève-glace électrique, qui présente un engrenage avec un boîtier d'engrenage (A2, C2, D2, D2', D2"), un moteur électrique (A1, C1, D1, D1") relié mécaniquement à l'engrenage, un dispositif de commande (A5, A5', B5, C5, D5', D5", E5) disposé dans le boîtier d'engrenage (A2, C2, D2, D2', D2") équipé d'au moins un semi-conducteur de puissance destiné à commander le moteur électrique (A1, C1, D1, D1") et un moyen dissipateur de chaleur (A9, A9', C9, D9, D9', D9", E9) couplé thermiquement au semi-conducteur de puissance servant de puits thermique pour dissiper la chaleur de perte du semi-conducteur de puissance,
**caractérisé en ce**
**que** le moyen dissipateur de chaleur (A9, A9', C9, D9, D9', D9", E9) est positionné contre une paroi (C92, D92, D92') du boîtier d'engrenage (A2, C2, D2, D2', D2") qui est plus mince que les parties porteuses du boîtier d'engrenage (A2, C2, D2, D2', D2").

2. Dispositif d'entraînement électromécanique selon la revendication 1, **caractérisé en ce que** le boîtier d'engrenage (A2, C2, D2, D2', D2") présente une ouverture (A25, C93) destinée à introduire le moyen dissipateur de chaleur (A9, A9', C9, D9, D9', D9", E9) et des éléments de guidage destinés à positionner le moyen dissipateur de chaleur (A9, C9, D9, D9', D9", E9) à une position définitive.

3. Dispositif d'entraînement électromécanique selon la revendication 2, **caractérisé en ce que** le moyen dissipateur de chaleur (A9, A9', C9, D9, D9', D9", E9) introduit dans le boîtier d'engrenage (A2, C2, D2, D2', D2") peut être encliqueté à la position définitive.

4. Dispositif d'entraînement électromécanique selon l'une quelconque des revendications 1 à 3, **caractérisé en ce que** le moyen dissipateur de chaleur (C9, D9, D9', D9", E9) est au moins partiellement encastré par injection dans un boîtier en matière synthétique moulé par injection (C2, D2, D2', D2") de l'engrenage.

5. Dispositif d'entraînement électromécanique selon au moins l'une quelconque des revendications précédentes, **caractérisé en ce que** le moyen dissipateur de chaleur est formé en tant que cornière de refroidissement (C9, D9 D9', D9", E9), et **en ce qu'**une surface de la cornière de refroidissement (C9, D9, D9', D9", E9) présente un couplage thermique avec le semi-conducteur de puissance et que l'autre surface est reliée à une partie du boîtier d'engrenage (A2, C2, D2, D2', D2").

6. Dispositif d'entraînement électromécanique selon la revendication 5, **caractérisé en ce que** la cornière de refroidissement (C9, D9, D9', D9", E9) est reliée par une liaison de matière au boîtier du dispositif de commande (C5).

7. Dispositif d'entraînement électromécanique selon la revendication 5 ou 6, **caractérisé en ce que** la cornière de refroidissement (C9, D9, D9', D9", E9) est enfermée dans la paroi (C92, D92, D92') du boîtier d'engrenage (C2, D2, D2') de manière hermétique à des liquides et des particules de poussière.

8. Dispositif d'entraînement électromécanique selon l'une quelconque des revendications 5 à 7, **caractérisé en ce que** la cornière de refroidissement (C9, D9, D9', D9", E9) sur le côté de la plaque de support n'est pas encastrée par injection avec le matériau synthétique du boîtier d'engrenage (A2, C2, D2, D2', D2") et **en ce que** le côté de la cornière de refroidissement (C9, D9, D9', D9", E9) tourné vers le boîtier d'un composant, en particulier d'un condensateur électrolytique (C53), raccordé au dispositif de commande (A5, A5', B5, C5, D5', D5", E5) est soutenu par le boîtier d'engrenage (A2, C2, D2, D2', D2") et augmente la stabilité mécanique d'un point de vissage (C90, D90, D90', D90", E90) intégré dans la cornière de refroidissement (C9, D9, D9', D9", E9) et servant d'élément de fixation.

9. Dispositif d'entraînement électromécanique selon au moins une des revendications précédentes, **caractérisé en ce que** le moyen dissipateur de chaleur (C9, D9, D9', D9", E9) en tant que thermoconducteur présente un autre couplage thermique avec un élément de refroidissement afin de dégager la chaleur de perte dissipée par le semi-conducteur de puissance à l'élément de refroidissement, et **en ce que** l'élément de refroidissement est en particulier une plaque de support sur laquelle est fixé le boîtier d'engrenage (C2, D2, D2', D2").

10. Dispositif d'entraînement électromécanique selon la revendication 9, **caractérisé par** une liaison mécanique entre le moyen dissipateur de chaleur (C9, D9, D9', D9", E9) et le boîtier d'engrenage (C2, D2, D2', D2") et par un élément de fixation (C90, D90, D90', D90", E90), intégré dans le moyen dissipateur de chaleur (A9, C9, D9, D9', D9", E9), destiné à fixer le boîtier d'engrenage (A2, C2, D2, D2', D2") sur l'élément de refroidissement.

11. Dispositif d'entraînement électromécanique selon la revendication 9, **caractérisé en ce que** le dispositif de commande (A5, A5', B5, C5, D5', D5", E5) est inséré par une ouverture (A25) du boîtier d'engrenage (A2, C2, D2, D2', D2") et fermé par un moyen dissipateur de chaleur ayant reçu la forme d'un couvercle de refroidissement (A9, A9') muni de nervures de refroidissement.

12. Dispositif d'entraînement électromécanique selon la revendication 11, **caractérisé en ce que** l'ouverture (A25) est rendue étanche par une liaison de matière, en particulier par
- un soudage aux ultrasons du couvercle de refroidissement (A9, A9', B9) avec un bord de l'ouverture (A25), ou
- un collage du couvercle de refroidissement (A9, A9', B9) avec un bord de l'ouverture (A25) au moyen d'une colle,
entre le couvercle de refroidissement (A9, A9', B9) et un bord de l'ouverture (A25).

13. Dispositif d'entraînement électromécanique selon au moins l'une quelconque des revendications précédentes, **caractérisé en ce qu'**un palier (E9115) pour un élément d'engrenage de l'engrenage est intégré dans le moyen dissipateur de chaleur (A9, C9, D9, D9', D9", E9).

14. Dispositif d'entraînement électromécanique selon au moins l'une quelconque des revendications précédentes, **caractérisé en ce que** le moyen dissipateur de chaleur (E9) présente des éléments de positionnement destinés à positionner le dispositif de commande (E5) par rapport à l'élément d'engrenage ou à un aimant (E155) fixé sur l'élément d'engrenage.

15. Dispositif d'entraînement électromécanique selon au moins l'une quelconque des revendications précédentes, **caractérisé en ce que** des pistes conductrices isolées les unes des autres sont disposées sur le moyen dissipateur de chaleur (A9, A9', C9, D9, D9', D9", E9) afin de relier des composants et des interfaces du dispositif de commande (A5, A5', B5, C5, D5', D5", E5).

16. Dispositif d'entraînement électromécanique selon la revendication 15, **caractérisé en ce que** les pistes conductrices présentent des éléments de contact qui peuvent être mis en contact avec le montage du moyen dissipateur de chaleur (A9, A9', B9, C9, D9, D9', D9", E9).
